(19) **Europäisches Patentamt**
**European Patent Office**
**Office européen des brevets**

(11) **EP 3 543 808 B1**

(12) **FASCICULE DE BREVET EUROPEEN**

(45) Date de publication et mention
de la délivrance du brevet:
**06.01.2021 Bulletin 2021/01**

(51) Int Cl.:
***G05B 19/19*** *(2006.01)*

(21) Numéro de dépôt: **19162251.3**

(22) Date de dépôt: **12.03.2019**

(54) **METHODE POUR LIMITER LES PHÉNOMÈNES VIBRATOIRES A L'INTERFACE PIECE/OUTIL**

METHODE ZUR BEGRENZUNG VON SCHWINGUNGSPHÄNOMENEN AN DER
WERKSTÜCK-WERKZEUG-SCHNITTSTELLE

METHOD FOR LIMITING VIBRATORY PHENOMENA AT THE PART/TOOL INTERFACE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **20.03.2018 CH 3592018**

(43) Date de publication de la demande:
**25.09.2019 Bulletin 2019/39**

(73) Titulaire: **Willemin-Macodel SA
2800 Delemont (CH)**

(72) Inventeurs:
• **HERZOG, Raoul
1424 Champagne (CH)**
• **SCHORDERET, Alain
1400 Cheseaux-Noréaz (CH)**
• **JACQUOD, Nicolas
1040 Echallens (CH)**
• **MARCHAND, Yoan
1005 Lausanne (CH)**

(74) Mandataire: **Pronovem
Pronovem Swiss Ltd
Case Postale 2243
2800 Delémont 2 (CH)**

(56) Documents cités:
**US-A1- 2010 032 879**

• **OKWUDIRE C ET AL: "A trajectory optimization
method for improved tracking of motion
commands using CNC machines that experience
unwanted vibration", CIRP ANNALS, ELSEVIER
BV, NL, CH, FR, vol. 65, no. 1, 7 juin 2016
(2016-06-07), pages 373-376, XP029626942, ISSN:
0007-8506, DOI: 10.1016/J.CIRP.2016.04.100**
• **ALTINTAS Y ET AL: "Contour error control of CNC
machine tools with vibration avoidance", CIRP
ANNALS, vol. 61, no. 1, 2 avril 2012 (2012-04-02),
pages 335-338, XP028511147, ISSN: 0007-8506,
DOI: 10.1016/J.CIRP.2012.03.132 [extrait le
2012-04-02]**

**Description**

Objet de l'invention

La présente invention concerne le domaine de l'usinage. Elle se rapporte plus précisément à une méthode appliquée au niveau de la commande d'axes de machine-outil dans le but de réduire les phénomènes vibratoires indésirables à l'interface pièce-outil.

Arrière-plan technologique et état de la technique

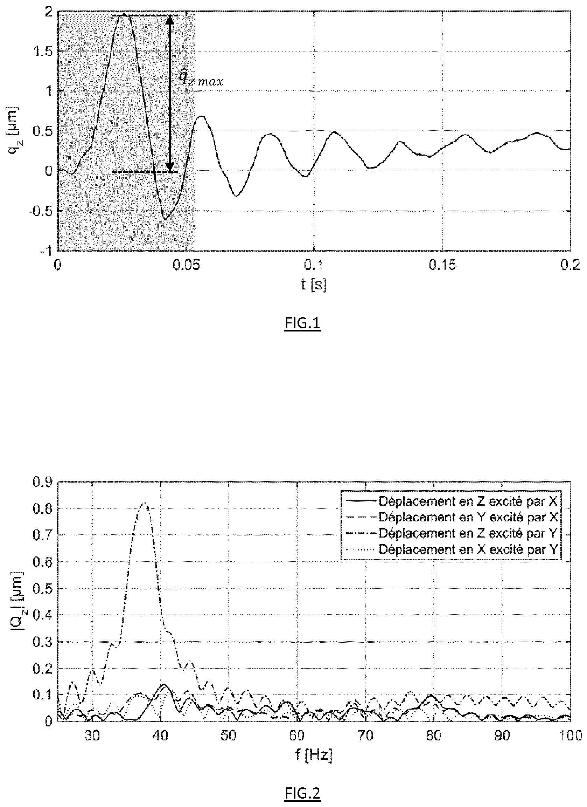

Les phénomènes vibratoires dans les machines d'usinage sont à l'origine de défauts qui pénalisent grandement la qualité d'usinage et, en conséquence, la productivité de la machine. L'amplitude de ces vibrations peut être relativement importante lorsqu'une fréquence propre de la machine est excitée. A titre d'exemple, la figure 1 illustre ce phénomène avec des vibrations dans la direction Z engendrées par un déplacement linéaire dans le plan XY. Lors de l'accélération d'un des axes dans le plan XY représentée à gauche par la partie grisée, un pic est observé suivi de vibrations résiduelles lors de la phase à vitesse constante de l'axe (partie claire).

Pour remédier à ce problème, certaines commandes numériques sont munies de filtres pour atténuer les fréquences gênantes. Cette optimisation est réalisée au niveau de la boucle de régulation prenant en compte le déplacement entre le moteur et la règle de mesure. Pour certains modes vibratoires de la machine, il est possible que ce déplacement moteur-règle ne soit pas affecté alors que le déplacement pièce-outil l'est. La commande reste dès lors "aveugle" vis-à-vis de ces déplacements et donc incapable de les compenser. Le document XP029626942, Okwudire C. et .: "A trajectory optimization method for improved tracking of motion commands using CNC machines that experience unwanted vibration", pages 373-376 du volume 65, numéro 1 de CIRP Annals en date du 07 juin 2016, divulgue une méthode d'optimisation pour limiter les phénomèmes vibratoires sur les machines d'usinage.

D'autres solutions pour réduire l'influence des fréquences propres critiques sur le comportement de la machine existent et consistent à jouer sur le profil d'accélération des axes. Le profil peut ainsi être linéaire par intervalle, c.à.d. triangulaire, trapézoïdal, etc. ou encore lisse dans le domaine temporel avec un profil de type bell-shaped ou autre. Le premier profil contient de manière intrinsèque des discontinuités qui sont incompatibles avec le niveau d'optimisation recherché pour diverses raisons qui seront explicitées en détail plus loin. Le second profil est utilisé sur certaines commandes numériques mais n'est actuellement pas optimisé en fonction des fréquences propres de chaque machine.

Résumé de l'invention

La présente invention a pour objet principal de proposer une méthode permettant de cibler les modes vibratoires perturbateurs et d'en réduire significativement les effets au niveau pièce-outil.

A cet effet, la méthode selon l'invention a pour objet d'identifier au moins une fréquence propre compliante de la machine - du point de vue du déplacement pièce-outil - et d'optimiser ensuite le profil d'accélération d'un ou plusieurs axes appliqué par la commande numérique en fonction du mode vibratoire préalablement identifié et, ce, afin de l'atténuer. Selon l'invention, le profil d'accélération est un profil lisse dans le domaine temporel qui présente après optimisation un zéro dans son spectre fréquentiel coïncidant avec la fréquence propre préalablement identifiée.

Le profil lisse optimisé selon l'invention présente pour avantage d'avoir entre les zéros de son spectre fréquentiel des lobes de faible amplitude qui garantissent un comportement robuste du modèle en cas de dérive de la fréquence propre autour de la valeur nominale préalablement déterminée.

Cette optimisation du profil d'accélération du ou des axes mène à une nette diminution de l'excitation des modes compliants de la machine avec une réduction des vibrations supérieure à 85%.

Une compensation est en outre appliquée dans la direction soumise aux vibrations pour supprimer les vibrations résiduelles et obtenir au final un très bon fini de surface de l'objet usiné. A cet égard, le profil lisse présente pour autre avantage qu'au moins sa première dérivée existe et est continue (fonction de classe $C^k$ avec $k \geq 1$), ce qui n'est pas le cas des profils de classe $C^0$ tels que les profils triangulaires ou encore les profils trapézoïdaux. Cette caractéristique propre au profil lisse selon l'invention permet d'appliquer une compensation pour les raisons suivantes. La compensation fait intervenir une addition de consigne de position sur l'axe à compenser qui est proportionnelle à l'accélération de l'axe qui produit l'excitation. En pratique, les commandes a priori (*feedforward*) nécessitent également la connaissance des consignes de vitesse et d'accélération. Pour un profil de classe $C^0$, la commande a priori d'accélération devient infinie et donc pas implémentable. Ce problème disparaît avec un profil sans discontinuité selon l'invention.

D'autres avantages ressortiront des caractéristiques exprimées dans les revendications, de la description détaillée de l'invention illustrée ci-après à l'aide des dessins annexés donnés à titre d'exemples nullement limitatifs.

## Brève description des figures

La figure 1 représente les vibrations en Z induites par le déplacement de l'axe Y en l'absence d'optimisation selon l'invention. La partie gauche en grisé représente l'amplitude des vibrations en Z lors de la phase d'accélération de l'axe Y avec un profil en cloche, suivie par l'amplitude des vibrations durant la phase à vitesse constante de cet axe. Les mesures de vibrations ont été réalisées à l'aide du R-Test pour une vitesse d'avance de l'outil de 444 mm/min (F444) sur une commande numérique Heidenhain.

La figure 2 représente après transformée de Fourier les vibrations en Z et en Y occasionnées par le déplacement de l'axe X et les vibrations en Z et en X occasionnées par le déplacement de l'axe Y.

La figure 3 représente les trois profils d'accélération d'axes testés dans le cadre de l'invention. Le profil triangulaire (TriOpt) est un exemple comparatif optimisé avec la méthode selon l'invention. Les deux autres sont des profils en cloche avant (BellStd) et après optimisation (BellOpt) selon l'invention.

La figure 4 représente dans le domaine fréquentiel les profils d'accélération de la figure 3 après transformée de Fourier.

La figure 5 en position inférieure représente les profils d'accélération en cloche des axes X et Y avant (BellStd en traits continus) et après optimisation (BellOpt en traits interrompus). La figure 5 en position supérieure représente le déplacement hors plan XY selon l'axe Z suite à la sollicitation des axes X et Y. Les mesures de vibrations en Z ont été réalisées à l'aide du R-Test. La vitesse d'avance de l'outil est de 444 mm/min.

La figure 6 représente pour ces mêmes profils d'accélération des axes X et Y les vibrations en Z au début de la phase à vitesse constante pour la fréquence critique de 37.5Hz et, ce, pour différentes vitesses d'avance de l'outil (de 129 à 645 mm/min).

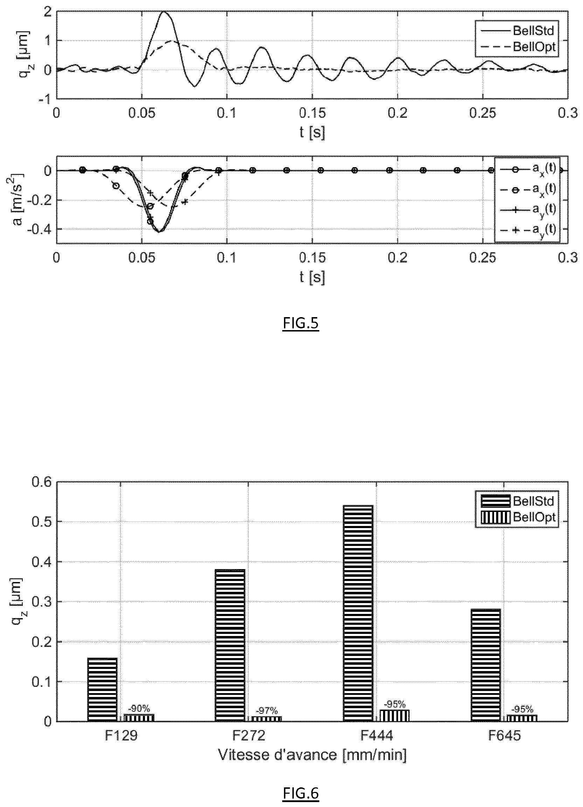

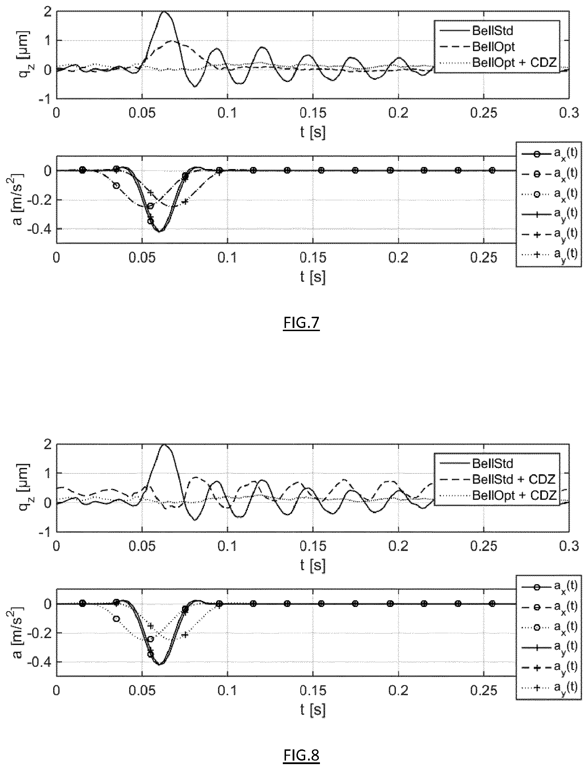

En sus des résultats de la figure 5, la figure 7 représente les résultats pour le profil en cloche optimisé des axes X et Y avec en outre une compensation dynamique en Z (BellOpt + CDZ).

La figure 8 illustre l'effet de la compensation dynamique (CDZ) sur le déplacement en Z pour un profil d'accélération en X et en Y avec (BellOpt + CDZ) et sans optimisation (BellStd + CDZ).

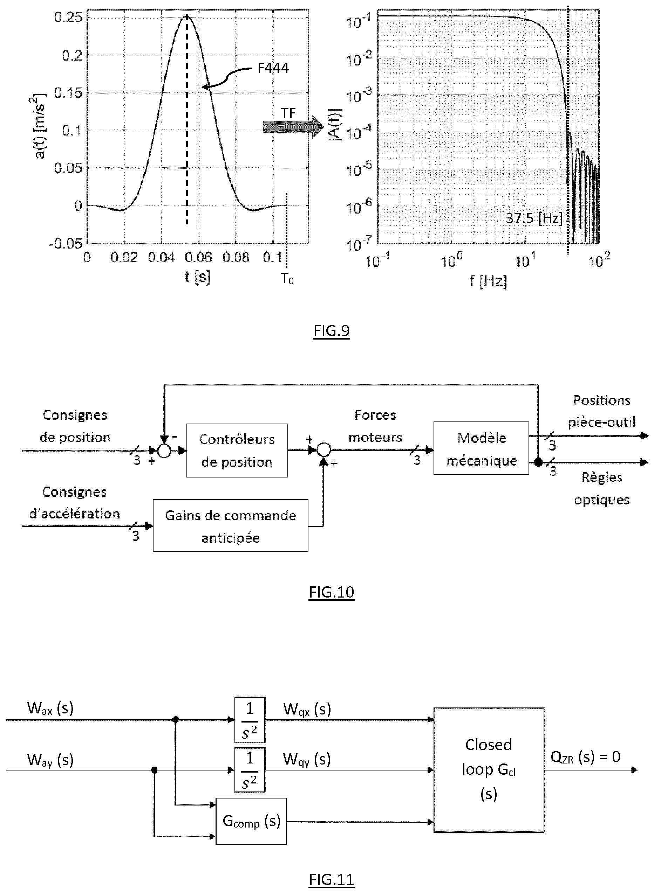

La figure 9 représente à gauche le profil en cloche optimisé selon l'invention et à droite sa transformée dans le domaine fréquentiel.

La figure 10 représente le schéma bloc du modèle mécanique incluant la boucle de régulation, à partir duquel est générée la fonction de transfert pour la compensation.

La figure 11 représente le schéma bloc pour le calcul de la fonction de transfert de compensation.

## Description générale de l'invention

La méthode selon l'invention est destinée à réduire les phénomènes vibratoires sur une machine d'usinage comprenant 3 axes linéaires X, Y et Z et éventuellement un ou deux axe(s) rotatif(s). Elle s'applique aussi bien aux configurations avec les axes linéaires et/ou rotatifs sur l'outil qu'aux configurations avec les axes linéaires et/ou rotatifs conditionnant le déplacement de la pièce.

La méthode selon l'invention s'articule autour des trois étapes suivantes :

1. Identifier au moins une fréquence propre critique de la machine d'usinage en question,
2. Optimiser le profil d'accélération d'un ou plusieurs axes appliqué par la commande numérique en fonction des modes vibratoires à atténuer,
3. Appliquer une compensation dans la ou les directions particulièrement affectées par les phénomènes vibratoires.

La présente méthode est illustrée dans les exemples plus loin pour des déplacements rectilignes selon l'axe X et/ou l'axe Y engendrant des vibrations hors plan XY selon l'axe Z. Elle est d'application pour tout déplacement impliquant un seul ou simultanément plusieurs axes, y compris des axes rotatifs, avec des profils d'accélération optimisés pour chacun des axes. La méthode est ainsi parfaitement adaptée pour réaliser des déplacements interpolés entre deux segments de droite sans exciter les fréquences propres prédéterminées. Par ailleurs, selon l'architecture de la machine d'usinage, les axes soumis aux vibrations peuvent être n'importe lequel des 5 axes et non pas exclusivement l'axe Z.

## Identification des fréquences propres

Dans la première étape, les fréquences propres liées aux modes fortement compliants au niveau pièce-outil sont identifiées pour une machine d'usinage donnée. Un mode vibratoire compliant est principalement caractérisé par sa fréquence propre et sa forme propre. Son caractère compliant est lié à sa propension à générer des déplacements relatifs importants entre la pièce et l'outil dans une direction donnée et, en corollaire, à nuire à la qualité finale de la pièce usinée. On entend par déplacement relatif important un déplacement avec des valeurs supérieures ou égales à 1 μm ou des valeurs qui sortent de la plage d'erreur de poursuite généralement admise entre le moteur et la règle. En fonction des architectures de machines, les axes sollicités peuvent être différents. Ainsi, dans une machine 3, 4 ou 5 axes, la sollicitation de n'importe quel axe peut engendrer des vibrations compliantes dans une direction colinéaire à un ou plusieurs axes distincts de l'axe de sollicitation.

Selon l'invention, l'identification des modes compliants peut être réalisée via un ou plusieurs capteurs (accéléromètres, capteurs optiques, etc.) positionnés à certains endroits de la machine. Avantageusement, les systèmes de mesures sont implantés de manière permanente dans des zones préférentielles de la machine préalablement définies au moyen d'analyses modales numériques ou expérimentales consistant dans ce dernier cas à réaliser des mesures avec des capteurs placés à une multitude d'endroits sur la machine. Ces zones ont la particularité d'être très sensibles aux modes compliants tels que définis précédemment. Grâce à l'implantation permanente des systèmes de mesures sur la machine d'usinage, il est possible d'identifier les modes compliants préalablement à l'usinage de chaque pièce si nécessaire. Cela permet d'initier la procédure d'identification dès qu'une dégradation du comportement pièce-outil est observée et, ce, que ce soit entre deux lots ou en plein milieu d'une production.

L'analyse des mesures est réalisée dans le domaine fréquentiel par analyse FFT (Fast FourierTransformation). De préférence, le spectre des fréquences ainsi obtenu est ensuite comparé au spectre des fréquences de modes compliants obtenu expérimentalement de manière à ne traiter que les fréquences qui ont une réelle influence sur le comportement pièce-outil. Généralement, une seule fréquence propre critique prédomine. Ensuite, les données caractéristiques du ou des modes compliants sont transférées à la commande numérique de la machine.

A titre d'exemple, les fréquences propres d'une machine d'usinage ont été déterminées sur base des mesures de vibrations réalisées avec le R-Test. Ce test consiste à mesurer les déplacements 3D parasites d'une bille montée en broche et placée entre trois capteurs de déplacement fixes. Ces déplacements parasites se superposent à une trajectoire nominale quelconque, programmée et supposée idéale. Sur la machine d'usinage, deux déplacements uni-axiaux respectivement en X et en Y ont été effectués avec un profil d'accélération non optimal (triangulaire dans l'exemple) avec un jerk de 200 m/s$^3$ et une vitesse d'avance de 444 mm/min. Les fréquences des modes propres obtenues en effectuant la transformée de Fourier des vibrations mesurées sont données à la figure 2. Dans l'exemple illustré, le mode le plus important est excité par l'axe Y et crée un déplacement pièce-outil en Z à une fréquence de 37.5 Hz. Il y a également un mode aux alentours de 80 Hz (compliance en Z pour une excitation en X) mais son amplitude est trop faible pour pouvoir en définir la fréquence exacte. Ces résultats montrent donc que, pour la machine d'usinage étudiée, il y a une seule fréquence dominante dont on doit éviter l'excitation lors du mouvement de l'axe Y.

**Description des profils d'accélération**

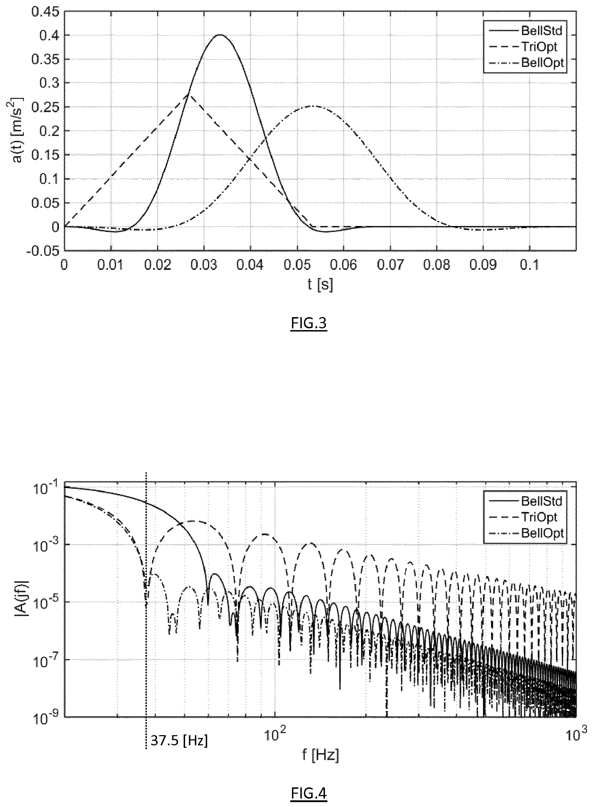

La fréquence du mode ainsi identifié comme compliant est ensuite utilisée pour générer les profils d'accélération optimisés des axes concernés. Selon l'invention, le profil de base à optimiser est un profil lisse dans le domaine temporel, autrement dit un profil ne présentant pas de discontinuités contrairement à des profils triangulaires, trapézoïdaux, etc. On entend par profil lisse tout profil ayant pour fonction une fonction au moins dérivable une fois sur son intervalle, avec une dérivée continue (fonction de classe $C^1$, $C^2$, $C^3$, etc. jusque $C^\infty$). Il peut s'agir, par exemple, du profil type bell-shaped qu'on qualifiera aussi de profil en cloche, d'un profil type spline, etc. Ce profil de base présente dans le spectre fréquentiel plusieurs zéros comme montré à la figure 4 pour la courbe BellStd qui sont exploités dans la présente invention pour éviter d'exciter les vibrations indésirables. A cet égard, la méthode consiste à optimiser le profil d'accélération, et plus spécifiquement le temps d'accélération, de manière à ce que le profil présente après optimisation un premier zéro dans le spectre fréquentiel correspondant à la fréquence de résonance du mode dominant de la machine préalablement identifiée.

Plus précisément, l'expression mathématique du profil lisse avant optimisation est la somme de plusieurs fonctions de base multipliées chacune par un coefficient. Le temps d'accélération $T_0$ est déterminé pour que chaque fonction de base soit orthogonale au signal vibratoire à ne pas exciter et, ce, quel que soit le choix des coefficients. De cette manière, $T_0$ est choisi pour éviter d'exciter le mode vibratoire préalablement identifié indépendamment des coefficients multiplicatifs. Ces derniers sont déterminés sur base d'autres critères tels que la vitesse d'avance requise au début et à la fin de l'accélération, l'accélération maximum souhaitée, les limites mécatroniques imposées par le matériel, etc. Les calculs menant à la détermination de $T_0$ et des coefficients seront explicités en détail plus loin pour un profil d'accélération en cloche.

Comme précédemment indiqué, généralement, une seule fréquence propre critique domine. Cependant, il n'est pas exclu que plusieurs fréquences propres soient identifiées comme critiques, c'est-à-dire susceptibles de nuire in fine à la qualité du produit usiné. Dans ce cas, les corrections appliquées sur les profils d'accélération pour chaque fréquence propre critique sont superposées.

Revenant à l'exemple précédemment analysé, le profil lisse doit être optimisé pour éviter d'exciter le mode à 37.5 Hz de la machine. La figure 3 représente trois profils d'accélération de l'axe Y : un profil lisse en forme de cloche avant (BellStd) et après optimisation (BellOpt) selon l'invention et, à titre comparatif, un profil triangulaire optimisé (TriOpt) avec la méthode selon l'invention. La transformée de Fourier de chacun des profils d'accélération a été calculée pour mieux voir leurs effets dans le domaine fréquentiel (figure 4). La figure 4 montre qu'effectivement seuls les profils d'accélération optimisés ont un zéro dans le spectre à la fréquence du mode dominant de la machine. Le profil en cloche de base avant optimisation va quant à lui exciter toutes les fréquences jusqu'à 60 Hz. Le profil en cloche optimisé présente pour avantage principal par rapport au profil triangulaire optimisé que l'amplitude du spectre reste beaucoup plus faible à haute fréquence. Le profil en cloche présente ainsi un comportement dit passe-bas à haute fréquence qui en cas de dérive autour de la valeur nominale de la fréquence propre préalablement déterminée permet de réduire l'impact des erreurs de modélisation inhérentes à cette dérive. Le modèle générant la trajectoire de l'outil est ainsi plus robuste par rapport à des légères variations du comportement vibratoire de la machine par exemple dues à la tolérance sur des machines neuves de même architecture, au vieillissement de la machine, à la position d'usinage, etc..

Le profil d'accélération optimisé selon l'invention présente ainsi pour caractéristiques que :

- il est lisse dans le domaine temporel et appartient à la classe $C^k$ avec k compris entre 1 et l'infini,
- le spectre est assez plat à basse fréquence, c.à.d. pour les fréquences inférieures aux fréquences des modes compliants. Pour l'exemple de la figure 4, le spectre est assez plat pour la gamme de fréquence s'étendant jusqu'à des valeurs de l'ordre de 10 Hz. Il y a ensuite une chute très prononcée dans le spectre.
- il comporte dans le domaine fréquentiel des zéros exploités pour éviter d'exciter les fréquences propres,
- entre les zéros, l'amplitude du spectre à haute fréquence reste assez faible comparée par exemple au spectre d'un profil triangulaire.

Le déplacement hors plan XY selon l'axe Z suite à une sollicitation des axes X et Y accélérés avec un profil en cloche optimisé ou non a été mesuré à l'aide du R-Test pour des vitesses d'avance d'outil de F129, F272, F444 et F645. La figure 5 illustre les résultats obtenus pour une vitesse d'avance F444 soit 444 mm/min. Elle permet de voir qu'avec le profil en cloche non optimisé le mode dominant de la machine est fortement excité, ce qui n'est plus le cas avec ce même profil optimisé selon l'invention. Lors de la phase d'accélération, le pic est réduit et lors de la phase à vitesse constante les vibrations résiduelles sont quasi inexistantes. Pour pouvoir quantifier la réduction des vibrations au début de la phase à vitesse constante, une transformée de Fourier du déplacement relatif en Z a été réalisée. La figure 6 regroupe les résultats obtenus pour le mode dominant à la fréquence de 37.5 Hz. Cette figure met bien en évidence l'amélioration obtenue grâce au profil d'accélération optimisé avec une réduction des vibrations au début de la phase à vitesse constante entre 90 et 97% selon la vitesse d'avance.

Néanmoins on observe à la figure 5 que, même si l'optimisation du profil d'accélération permet de fortement réduire le pic, les vibrations lors de la phase d'accélération ne sont pas totalement annihilées. Ce déplacement inévitable résulte de phénomènes inertiels liés aux accélérations des axes de la machine. Pour le supprimer, il faudrait que les accélérations soient nulles, ce qui est naturellement incompatible avec l'idée même d'un axe d'usinage. Afin de contrecarrer ce déplacement inévitable, une étape additionnelle de la méthode selon l'invention consiste à appliquer une compensation sur l'axe affecté par ce déplacement.

## Compensation statique ou dynamique

Ainsi, l'optimisation du profil d'accélération est complétée par l'addition d'une consigne de position sur le ou les axes soumis aux vibrations pour compenser les vibrations résiduelles. Cette étape est nécessaire pour réduire significativement les marques d'usinage sur la pièce. Cette compensation peut être statique, c.à.d. basée sur un modèle statique de la machine (gain statique de la fonction de transfert en boucle fermée) et uniquement appliquée lors de la phase d'accélération ou, préférentiellement dynamique, c.à.d. basée sur un modèle dynamique de la machine (fonction de transfert complète en boucle fermée) et appliquée lors de la phase d'accélération et de la phase à vitesse constante. Une compensation statique peut dans certains cas être suffisante. C'est le cas lorsqu'il y a un seul mode vibratoire dominant sur la machine. La combinaison d'un profil d'accélération optimisé pour ce mode et de la compensation statique peut alors suffire. Par contre, en présence de plusieurs modes vibratoires, la compensation dynamique permet d'atténuer les vibrations de modes qui n'ont pas été pris en compte lors de l'optimisation des profils d'accélération.

La figure 7 illustre bien l'amélioration apportée par la compensation dynamique. Pendant la phase d'accélération, la compensation couplée avec un profil d'accélération optimisé permet de réduire de 2 à 0.1 μm le déplacement relatif en Z.

Comme montré à la figure 8, la seule compensation dynamique sans optimisation préalable du profil d'accélération n'est pas forcément suffisante. Les résultats obtenus avec un profil en cloche non optimisé avec et sans compensation ont été comparés avec ceux du profil en cloche optimisé avec compensation. On observe que, sans optimisation, la compensation réduit fortement le déplacement en Z durant la phase d'accélération mais en revanche elle n'a que peu d'influence sur les vibrations pendant la phase à vitesse constante.

Pour déterminer l'effet de la méthode selon l'invention sur la qualité d'usinage, différents échantillons ont été usinés partant d'une trajectoire d'outil avec un profil d'accélération avec ou sans optimisation éventuellement couplé dans le premier cas avec une compensation. Une analyse visuelle des échantillons confirmée par des mesures au microscope a permis de conclure que la seule optimisation des profils d'accélération ne permet pas de supprimer les marques de fraise. Par contre, la combinaison de l'optimisation des accélérations et de la compensation dynamique offre une très nette amélioration visuelle avec, pour corollaire, que la vitesse d'avance peut être augmentée sans avoir de dégradation de l'état de surface. Ainsi, l'optimisation du profil d'accélération avec compensation statique ou dynamique permet une réduction de la profondeur des marques de fraise supérieure à 90%.

## Description détaillée de l'invention

### Détermination des profils d'accélération

Comme déjà mentionné l'étape d'optimisation consiste à ajuster le temps d'accélération $T_0$ du profil lisse de base afin qu'un premier zéro dans le spectre fréquentiel corresponde à la fréquence propre qu'on souhaite annihiler. A titre d'exemple, le profil de base est un profil en cloche ayant pour expression mathématique (Eq.1):

$$a(t) = a_0 - a_1 \cos\left(\frac{2\pi}{T_0}t\right) + a_2 \cos\left(\frac{4\pi}{T_0}t\right) - a_3 \cos\left(\frac{6\pi}{T_0}t\right)$$

avec $To$ qui correspond au temps d'accélération (s) et $a_0$, $a_1$, $a_2$ et $a_3$ (m/s$^2$) qui sont respectivement les quatre coefficients multiplicatifs des fonctions de base ($1$, $\cos(\frac{2\pi}{T_0}t)$, $\cos(\frac{4\pi}{T_0}t)$, $\cos(\frac{6\pi}{T_0}t)$).

$To$ est défini pour avoir le premier zéro dans le spectre à la fréquence souhaitée indépendamment de $a_0$, $a_1$, $a_2$ et $a_3$. Pour ce faire, la valeur absolue de la transformée de Fourier pour chacune des fonctions de bases de l'Eq.1 doit être égale à 0 comme suit (Eq.2) :

$$|A(f_{res})| = \left|\int_0^{T_0} a(t)e^{-j2\pi f_{res}t}dt\right| = \left|\int_0^{T_0} a(t)(\cos(2\pi f_{res}t) - j\sin(2\pi f_{res}t))dt\right| = 0$$

Comme l'Eq.1 comporte quatre fonctions de base et que la valeur absolue de la transformée de Fourier à l'Eq.2 donne deux équations, les 8 équations suivantes doivent être satisfaites :

$$\int_0^{T_0} 1 \cdot \cos(2\pi f_{res}t)\ dt\ = 0$$

$$\int_0^{T_0} 1 \cdot \sin(2\pi f_{res}t)\ dt\ = 0$$

$$\int_0^{T_0} \cos\left(\frac{\pi f_{res}}{2}t\right)\cos(2\pi f_{res}t)\ dt\ = 0$$

$$\int_0^{T_0} \cos\left(\frac{\pi f_{res}}{2}t\right)\sin(2\pi f_{res}t)\ dt\ = 0$$

$$\int_0^{T_0} \cos(\pi f_{res}t)\cos(2\pi f_{res}t)\ dt\ = 0$$

$$\int_0^{T_0} \cos(\pi f_{res} t) \sin(2\pi f_{res} t)\ dt\ \ = 0$$

$$\int_0^{T_0} \cos\left(\frac{3\pi f_{res}}{2} t\right) \cos(2\pi f_{res} t)\ dt\ \ = 0$$

$$\int_0^{T_0} \cos\left(\frac{3\pi f_{res}}{2} t\right) \sin(2\pi f_{res} t)\ dt\ \ = 0$$

Le détail du calcul pour la partie réelle de la transformée de Fourier de la première fonction de base de l'Eq.1 est le suivant :

$$\int_0^{T_0} 1 \cdot \cos(2\pi f_{res} t)\ dt = \frac{1}{2\pi f_{res}} \sin(2\pi f_{res} T_0) = 0$$

Donc :

$2\pi f_{res} T_0 = k\pi$ pour $k \in \mathbb{N}$

Ce qui donne :

$$T_0 = \frac{k}{2 f_{res}}$$

En résolvant les sept équations restantes et en regroupant les valeurs obtenues, la relation suivante est obtenue :

$$T_0 = \frac{k}{f_{res}} \qquad \text{avec } k \geq 4$$

Pour une durée d'accélération la plus courte possible, k doit donc être égal à 4. L'équation

$$T_0 = \frac{4}{f_{res}}$$

donne dès lors la condition à respecter pour qu'en utilisant un profil d'accélération en cloche la vibration durant la phase à vitesse constante s'annule le plus rapidement possible.

Maintenant que le profil en cloche est optimisé pour ne plus exciter le mode propre de la machine, il reste à formuler les quatre équations permettant de déterminer la valeur des coefficients $a_0$ à $a_3$.

Ces quatre coefficients sont déterminés sur base des quatre équations suivantes établies pour répondre à certaines consignes en termes de vitesse, d'accélération et de dérivée seconde de l'accélération:

$$a_0 T_0 \qquad\qquad = v_{max}$$

$$a_0 - a_1 + a_2 - a_3 \qquad = 0$$

$$a\left(\frac{T_0}{2}\right) = a_0 + a_1 + a_2 + a_3 = a_{max}$$

$$a''(0) = \left(\frac{2\pi}{T_0}\right)^2 (a_1 - 4a_2 + 9a_3) = j_{dot\ init}$$

La première équation permet de définir la vitesse maximum ($v_{max}$) souhaitée à la fin de la phase d'accélération. La deuxième équation établit que l'accélération initiale et finale doit être nulle. La troisième équation permet d'imposer la valeur d'accélération maximum $a_{max}$ au temps $t=T_0/2$ et finalement la quatrième équation impose la valeur initiale $j_{dot\ init}$ de la dérivée seconde $a''(0)$ de l'accélération.

En appliquant les relations ci-dessus à un cas concret avec une vitesse d'avance de 444 mm/min, une fréquence propre de 37.5 Hz, une accélération max de 0.57 m/s$^2$ et une dérivée seconde de l'accélération initiale de -0.046 m/s$^4$, on obtient $T_0$=0.1067 s, $a_0$=0.0694 m/s$^2$, $a_1$=0.1150 m/s$^2$, $a_2$=0.0551 m/s$^2$, $a_3$=0.0095 m/s$^2$. La figure 9 illustre le profil d'accélération obtenu ainsi que son spectre fréquentiel avec un zéro à la fréquence de 37.5 Hz.

**Application d'une compensation statique ou dynamique**

Le but de la compensation sur un axe est de générer un signal de compensation idéale comme consigne de position dudit axe, de telle manière à annuler le déplacement relatif pièce-outil selon cet axe.

Cette compensation réalisée en temps réel s'appuie sur un modèle complet en boucle fermée incluant un modèle mécanique et la régulation. Ce modèle complet est connu en soi de l'homme de métier et schématisé à la figure 10 pour les 3 axes X, Y et Z. A titre informatif, la description du modèle peut être donnée comme suit :

- La modélisation du système mécanique est basée sur un système de corps rigides représentant chacun un des corps principaux de la machine (châssis, bâti, support croisé, colonne, support bélier).
- Les liaisons entre les corps sont représentées par des rigidités (déplacements linéaires et angulaires) ainsi que des amortissements de type visqueux.
- Les valeurs des paramètres des corps rigides (masses, inerties) ainsi que celles des rigidités de liaisons sont établies a priori sur la base des modèles CAO ainsi que des informations techniques des composants. Ces valeurs peuvent être ajustées au moyen de mesures expérimentales ou de modèles numériques de type éléments finis plus précis.
- Les propriétés d'amortissement des liaisons sont obtenues a posteriori par transformation de coordonnées inverses (modale-matériel) au moyen des valeurs d'amortissement modaux mesurées ou estimées.
- La modélisation complète du système ajoute la régulation au modèle du système mécanique. Les rigidités de régulation inclues dans le modèle mécanique sont supprimées (valeurs nulles) pour l'implémentation avec régulation.

La figure 11 représente de manière plus détaillée le schéma bloc de la boucle fermée sur lequel se greffe la fonction de transfert de compensation ($G_{comp}$) selon l'invention qui permet de modifier les consignes de position des axes pour compenser la vibration. Les équations ci-après expliquent la démarche pour le calcul de la fonction de transfert de compensation pour une compensation en Z nécessitée par une sollicitation des axes X et Y.

$$Q_{ZR}(s) = G_{clx}(s) \cdot W_{qx}(s) + G_{cly}(s) \cdot W_{qy}(s) + G_{clz}(s) \cdot W_{qz}(s) = 0$$

Connu — Inconnu

$$\Rightarrow W_{qz}(s) = -\frac{G_{clx}(s)}{G_{clz}(s)} \cdot W_{qx}(s) - \frac{G_{cly}(s)}{G_{clz}(s)} \cdot W_{qy}(s) = -\frac{G_{clx}(s)}{s^2 \cdot G_{clz}(s)} \cdot W_{ax}(s) - \frac{G_{cly}(s)}{s^2 \cdot G_{clz}(s)} \cdot W_{ay}(s)$$

$$\Rightarrow \boxed{G_{comp}(s) = -\frac{G_{clx}(s) + G_{cly}(s)}{s^2 \cdot G_{clz}(s)}}$$

avec s qui est une variable de la transformée de Laplace, $Q_{ZR}$ qui est le déplacement pièce-outil en Z, $W_{ax}$ et $W_{ay}$ qui sont les consignes d'accélération en X et en Y, $W_{qx}$ et $W_{qy}$ qui sont les consignes de position en X et en Y et $G_{clx}$, $G_{cly}$ et $G_{clz}$ qui sont les fonctions de transfert en boucle fermée pour respectivement les axes X, Y et Z.

La formulation ci-dessus peut être étendue à 4 ou 5 axes avec au numérateur des fonctions de transfert additionnelles pour les axes supplémentaires.

En présence de plusieurs axes à compenser, chaque axe est traité séparément avec les algorithmes précités.

En pratique, le modèle prend comme entrées les consignes de position et d'accélération des axes en mouvement et peut sortir les consignes de position, de vitesse et d'accélération de l'axe à compenser.

## Revendications

1. Méthode pour limiter des phénomènes vibratoires à une interface pièce-outil sur une machine d'usinage comprenant 3, 4 ou 5 axes machines, ladite méthode comprenant des étapes de :

   - Identification d'au moins une fréquence propre $f_{res}$ de la machine d'usinage susceptible d'être excitée lors d'une phase d'accélération d'au moins un des axes machines, dit axe d'excitation, et d'induire suite à cette excitation un déplacement relatif entre la pièce et l'outil selon une direction colinéaire avec au moins un axe machine distinct dudit au moins axe d'excitation, l'axe machine distinct étant dit axe compliant,
   - Application sur chaque axe d'excitation d'un profil d'accélération lisse ayant un temps d'accélération $To$ déterminé pour qu'un premier zéro dans le domaine fréquentiel du profil d'accélération corresponde à ladite au moins fréquence propre $f_{res}$ préalablement identifiée,
   - Application d'une compensation sur chaque axe compliant pendant la phase d'accélération dudit au moins axe d'excitation pour supprimer tout déplacement relatif résiduel entre la pièce et l'outil.

2. Méthode selon la revendication 1, **caractérisée en ce que** la compensation sur chaque axe compliant est également appliquée pendant une phase à vitesse constante suivant la phase d'accélération.

3. Méthode selon la revendication 1 ou 2, **caractérisée en ce que** le profil lisse d'accélération répond à une expression mathématique qui est la somme de plusieurs fonctions de base multipliées chacune par un coefficient distinct, $T_0$ étant déterminé pour que chaque fonction de base soit orthogonale au signal vibratoire généré par l'excitation de ladite au moins fréquence propre identifiée, indépendamment du choix de chaque coefficient.

4. Méthode selon la revendication 3, **caractérisée en ce que** le coefficient est déterminé sur base de critères cinétiques tels que la vitesse dudit au moins axe d'excitation avant et après la phase d'accélération, l'accélération maximale, la dérivée seconde de l'accélération.

5. Méthode selon l'une quelconque des revendications précédentes, **caractérisée en ce que** le profil d'accélération est un profil en cloche.

6. Méthode selon la revendication 5, **caractérisée en ce que** le profil d'accélération répond à l'expression mathématique suivante :

$$a(t) = a_0 - a_1 \cos\left(\frac{2\pi}{T_0}t\right) + a_2 \cos\left(\frac{4\pi}{T_0}t\right) - a_3 \cos\left(\frac{6\pi}{T_0}t\right)$$

avec $T_0$(s) qui est le temps d'accélération, $a_0$, $a_1$, $a_2$ et $a_3$ (m/s$^2$) qui sont respectivement les coefficients des fonctions de base ($1$, $\cos(\frac{2\pi}{T_0}t)$, $\cos(\frac{4\pi}{T_0}t)$, $\cos(\frac{6\pi}{T_0}t)$).

7. Méthode selon la revendication 6, **caractérisée en ce que** le temps d'accélération $To$ doit être égal à $k/f_{res}$ avec $k \geq 4$ pour qu'un premier zéro dans le domaine fréquentiel du profil d'accélération corresponde à ladite au moins fréquence propre $f_{res}$ préalablement identifiée.

8. Méthode selon la revendication 6 ou 7, **caractérisée en ce que** les paramètres $a_0$, $a_1$, $a_2$ et $a_3$ répondent aux équations suivantes :

$$a_0 T_0 \qquad\qquad = v_{max}$$

$$a_0 - a_1 + a_2 - a_3 \qquad = 0$$

$$a\left(\frac{T_0}{2}\right) = \qquad a_0 + a_1 + a_2 + a_3 \qquad = a_{max}$$

$$a''(0) = \quad \left(\frac{2\pi}{T_0}\right)^2 (a_1 - 4a_2 + 9a_3) \quad = j_{dot\ init}$$

avec

$v_{max}$ qui est la vitesse pendant la phase à vitesse constante suivant la phase d'accélération,
$a_{max}$ qui est l'accélération maximum au temps $t = T_0/2$
jdot init qui est la dérivée seconde de l'accélération au début de la phase d'accélération.

9.  Méthode selon l'une quelconque des revendications précédentes, **caractérisée en ce que** l'identification de ladite au moins fréquence propre $f_{res}$ est réalisée sur la machine d'usinage munie d'un ou plusieurs capteurs permettant de mesurer des vibrations induites par la phase d'accélération dudit au moins axe d'excitation, l'identification pouvant être réalisée préalablement à l'usinage de la pièce.

10. Méthode selon l'une quelconque des revendications précédentes, **caractérisée en ce que** seule(s) la ou les fréquence(s) propre(s) $f_{res}$ susceptible(s) d'induire un déplacement relatif entre la pièce et l'outil supérieur ou égal à 1 $\mu$m sont retenues pour la détermination de $T_0$.

11. Méthode selon la revendication 10, **caractérisée en ce que**, lorsque plusieurs fréquences propres $f_{res}$ sont susceptibles d'induire un déplacement relatif entre la pièce et l'outil supérieur ou égal à 1 $\mu$m, les corrections appliquées sur le profil d'accélération pour chaque axe d'excitation sont superposées.

12. Méthode selon l'une quelconque des revendications précédentes, **caractérisée en ce que** la compensation à appliquer sur chaque axe compliant est déterminée sur base des consignes de position et d'accélération dudit au moins axe d'excitation.

13. Méthode selon l'une quelconque des revendications précédentes, **caractérisée en ce que** la compensation à appliquer sur chaque axe compliant est déterminée sur base d'une première relation:

$$Q_{CR}(s) = G_{CLE}(s) \cdot W_{QE}(s) + G_{CLC}(s) \cdot W_{QC}(s) = 0$$

avec s qui est une variable de la transformée de Laplace,
$Q_{CR}(s)$ qui est le déplacement pièce-outil selon chaque axe compliant qui doit être égal à 0,
$G_{CLE}(s)$ qui est une fonction de transfert en boucle fermée de chaque axe d'excitation,
$G_{CLC}(s)$ qui est une fonction de transfert en boucle fermée de chaque axe compliant,
$W_{QE}(s)$ et $W_{QC}(s)$ qui sont respectivement une consigne de position de chaque axe d'excitation et chaque axe compliant,
avec un terme $G_{CLE}(s) \cdot W_{QE}(s)$ pour chaque axe d'excitation,
sur base de ladite première relation étant calculée une fonction de transfert de compensation $G_{COMP}(s)$ selon une seconde relation:

$$G_{COMP}(s) = -\frac{G_{CLE}(s)}{s^2 . G_{CLC}(s)}$$

avec un terme $G_{CLE}(s)$ pour chaque axe d'excitation, chaque terme s'additionnant au numérateur de ladite seconde relation.

14. Programme d'ordinateur adapté pour mettre en œuvre la méthode selon l'une quelconque des revendications précédentes et, en particulier, pour traiter des données issues de l'identification de ladite au moins fréquence propre $f_{res}$, déterminer $T_0$ et déterminer la compensation à appliquer.

15. Commande numérique sur laquelle est implémenté le programme d'ordinateur selon la revendication 14.

**Patentansprüche**

1. Methode zur Begrenzung von Schwingungsphänomenen an einer Werkstück-Werkzeug-Schnittstelle auf einer Bearbeitungsmaschine, umfassend 3, 4 oder 5 Maschinenachsen, wobei die besagte Methode die folgenden Schritte umfasst:

   - Identifizieren von mindestens einer Eigenfrequenz $f_{res}$ der Bearbeitungsmaschine, die während einer Beschleunigungsphase mindestens einer der Maschinenachsen, bezeichnet als Erregungsachse, erregt werden und nach dieser Erregung eine relative Verschiebung zwischen dem Werkstück und dem Werkzeug gemäß einer kollinearen Richtung induzieren kann, wobei mindestens eine Maschinenachse verschieden von besagter mindestens einen Erregungsachse ist, wobei die verschiedene Maschinenachse als konforme Achse bezeichnet wird,
   - Anwenden, auf jede Erregungsachse, eines glatten Beschleunigungsprofils mit einer Beschleunigungszeit $T_0$, die so bestimmt ist, dass eine erste Null im Frequenzbereich des Beschleunigungsprofils mindestens der Eigenfrequenz $f_{res}$ entspricht, die zuvor identifiziert wurde,
   - Anwenden einer Kompensierung auf jede konforme Achse während der Beschleunigungsphase der mindestens einen Erregungsachse, um jede relative Restverschiebung zwischen dem Werkstück und dem Werkzeug zu unterdrücken.

2. Methode nach Anspruch 1, **dadurch gekennzeichnet, dass** die Kompensierung auf jeder konformen Achse auch während einer Phase mit konstanter Geschwindigkeit nach der Beschleunigungsphase angewendet wird.

3. Methode nach Anspruch 1 oder 2, **dadurch gekennzeichnet, dass** das glatte Beschleunigungsprofil einem mathematischen Ausdruck entspricht, der die Summe von mehreren Grundfunktionen ist, die jeweils mit einem verschiedenen Koeffizienten multipliziert werden, wobei $T_0$ so bestimmt wird, das jede Grundfunktion orthogonal zum Schwingungssignal ist, das durch die Erregung besagter mindestens einen identifizierten Eigenfrequenz erzeugt wird, unabhängig von der Wahl jedes Koeffizienten.

4. Methode nach Anspruch 3, **dadurch gekennzeichnet, dass** der Koeffizient auf der Basis von kinetischen Kriterien bestimmt wird, wie z. B. der Geschwindigkeit besagter mindestens einen Erregungsachse vor und nach der Beschleunigungsphase, der maximalen Beschleunigung, der zweiten Ableitung der Beschleunigung.

5. Methode nach irgendeinem der vorhergehenden Ansprüche, **dadurch gekennzeichnet, dass** das Beschleunigungsprofil ein Glockenprofil ist.

6. Methode nach Anspruch 5, **dadurch gekennzeichnet, dass** das Beschleunigungsprofil dem folgenden mathematischen Ausdruck entspricht:

$$a(t) = a_0 - a_1 \cos\left(\frac{2\pi}{T_0}t\right) + a_2 \cos\left(\frac{4\pi}{T_0}t\right) - a_3 \cos\left(\frac{6\pi}{T_0}t\right)$$

wobei $T_0$ (S) die Beschleunigungszeit ist, $a_0$, $a_1$, $a_2$ und $a_3$ (m/s$^2$) jeweils die Koeffizienten der Grundfunktionen (*1*,

$cos(\frac{2\pi}{T_0}t)$, $cos(\frac{4\pi}{T_0}t)$, $cos(\frac{6\pi}{T_0}t)$) sind.

7. Methode nach Anspruch 6, **dadurch gekennzeichnet, dass** die Beschleunigungszeit $T_0$ gleich $k/f_{res}$ sein muss, wobei $k \geq 4$, so dass eine erste Null im Frequenzbereich des Beschleunigungsprofils mindestens der Eigenfrequenz

$f_{res}$ entspricht, die zuvor identifiziert wurde.

8. Methode nach Anspruch 6 oder 7, **dadurch gekennzeichnet, dass** die Parameter $a_0$, $a_1$, $a_2$ und $a_3$ den folgenden Gleichungen entsprechen:

$$a_0 T_0 = v_{max}$$

$$a_0 - a_1 + a_2 - a_3 = 0$$

$$a\left(\frac{T_0}{2}\right) = a_0 + a_1 + a_2 + a_3 = a_{max}$$

$$a''(0) = \left(\frac{2\pi}{T_0}\right)^2 (a_1 - 4a_2 + 9a_3) = j_{dot\ init}$$

wobei

$v_{max}$ die Geschwindigkeit während der Phase mit konstanter Geschwindigkeit nach der Beschleunigungsphase ist,
$a_{max}$, die maximale Beschleunigung in der Zeit $t = T_0/2$ ist,
jdot init die zweite Ableitung der Beschleunigung am Anfang der Beschleunigunsphase ist.

9. Methode nach irgendeinem der vorhergehenden Ansprüche, **dadurch gekennzeichnet, dass** die Identifizierung besagter mindestens einen Eigenfrequenz $f_{res}$ auf der Bearbeitungsmaschine erfolgt, die mit einem oder mehreren Sensor(en) ausgestattet ist, die es ermöglichen, Schwingungen zu messen, die durch die Beschleunigungsphase besagter mindestens einen Erregungsachse induziert wurden, wobei die Identifizierung vor der Bearbeitung des Werkstücks erfolgen kann.

10. Methode nach irgendeinem der vorhergehenden Ansprüche, **dadurch gekennzeichnet, dass** nur die Eigenfrequenz(en) $f_{res}$, die eine relative Verschiebung zwischen dem Werkstück und dem Werkzeug von mehr als oder gleich 1 $\mu$m induzieren kann/können, für die Bestimmung von $T_0$ zurückgehalten werden.

11. Methode nach Anspruch 10, **dadurch gekennzeichnet, dass**, wenn mehrere Eigenfrequenzen $f_{res}$ eine relative Verschiebung zwischen dem Werkstück und dem Werkzeug von mehr als oder gleich 1 $\mu$m induzieren können, die Korrekturen, die auf das Beschleunigungsprofil für jede Erregungsachse angewendet werden, überlagert sind.

12. Methode nach irgendeinem der vorhergehenden Ansprüche, **dadurch gekennzeichnet, dass** die Kompensierung, die auf jede konforme Achse angewendet werden soll, auf der Basis von Positions- und Beschleunigungswerten der besagten mindestens einen Erregungsachse bestimmt wird.

13. Methode nach irgendeinem der vorhergehenden Ansprüche, **dadurch gekennzeichnet, dass** die Kompensierung, die auf jede konforme Achse angewendet werden soll, auf der Basis einer ersten Beziehung bestimmt wird:

$$Q_{CR}(s) = G_{CLE}(s) \cdot W_{QE}(s) + G_{CLC}(s) \cdot W_{QC}(s) = 0$$

wobei $s$ eine Variable der Laplace-Transformation ist,
$Q_{CR}(s)$ die Verschiebung Werkstück-Werkzeug gemäß jeder konformen Achse ist, die gleich 0 sein muss,
$G_{CLE}(s)$ eine Übertragungsfunktion im geschlossenen Regelkreis jeder Erregungsachse ist,
$G_{CLC}(s)$ eine Übertragungsfunktion im geschlossenen Regelkreis jeder konformen Achse ist,
$W_{QE}(s)$ und $W_{QC}(s)$ jeweils ein Positionswert jeder Erregungsachse und jeder konformen Achse sind,
mit einem Term $GCLE(s) \cdot W_{QE}(s)$ für jede Erregungsachse,
wobei auf der Basis der besagten ersten Beziehung eine Übertragungsfunktion der Kompensierung $G_{COMP}(s)$ gemäß einer zweiten Beziehung berechnet wird;

$$G_{COMP}(s) = -\frac{G_{CLE}(s)}{s^2.G_{CLC}(s)}$$

mit einem Term $G_{CLE}(S)$ für jede Erregungsachse, wobei jeder Term dem Zähler der besagten zweiten Beziehung zugegeben wird.

**14.** Computerprogramm, das ausgelegt ist, um die Methode nach irgendeinem der vorhergehenden Ansprüche durchzuführen, und insbesondere, um Daten zu bearbeiten, die aus der Identifizierung der besagten mindestens einen Eigenfrequenz $f_{res}$.stammen, $T_0$ zu bestimmen und die Kompensierung, die angewendet werden soll, zu bestimmen.

**15.** Digitale Steuerung, auf der das Computerprogramm nach Anspruch 14 implementiert ist.

**Claims**

**1.** Method for limiting vibratory phenomena at a part-tool interface on a machining tool comprising 3, 4 or 5 machining tool axes, said method comprising the steps of:

- Identifying at least one natural frequency $f_{res}$ of the machining tool that is able to be excited during an acceleration phase of at least one of the machining tool axes, called excitation axis, and to induce, following this excitation, a relative movement between the part and the tool along a direction collinear with at least one machining tool axis that is separate from said at least excitation axis, the separate machining tool axis being called compliant axis,
- Applying, on each excitation axis, a smooth acceleration profile having an acceleration time $T_0$ determined such that a first zero in the frequency domain of the acceleration profile corresponds to said at least natural frequency $f_{res}$ previously identified,
- Applying a compensation on each compliant axis during the acceleration phase of said at least excitation axis in order to eliminate any residual relative movement between the part and the tool.

**2.** Method according to claim 1, **characterized in that** the compensation on each compliant axis is also applied during a phase of constant speed following the acceleration phase.

**3.** Method according to claim 1 or 2, **characterized in that** the smooth acceleration profile satisfies a mathematical expression that is the sum of several basic functions each multiplied by a separate coefficient, $T_0$ being determined such that each basic function is orthogonal to the vibratory signal generated by the excitation of said at least identified natural frequency, independently of the choice of each coefficient.

**4.** Method according to claim 3, **characterized in that** the coefficient is determined based on kinetic criteria such as the speed of said at least excitation axis before and after the acceleration phase, the maximum acceleration, the second derivative of the acceleration.

**5.** Method according to any one of the preceding claims, **characterized in that** the acceleration profile is a bell profile.

**6.** Method according to claim 5, **characterized in that** the acceleration profile satisfies the following mathematical expression:

$$a(t) = a_0 - a_1 \cos\left(\frac{2\pi}{T_0}t\right) + a_2 \cos\left(\frac{4\pi}{T_0}t\right) - a_3 \cos\left(\frac{6\pi}{T_0}t\right)$$

with $T_0$ being the acceleration time, $a_0$, $a_1$, $a_2$ and $a_3$ respectively being the coefficients of the basic functions (1, $cos(\frac{2\pi}{T_0}t)$, $cos(\frac{4\pi}{T_0}t)$, $cos(\frac{6\pi}{T_0}t)$).

**7.** Method according to claim 6, **characterized in that** the acceleration time $T_0$ must be equal to $k/f_{res}$ with k≥4 in order for a first zero in the frequency domain of the acceleration profile to correspond to said at least natural frequency $f_{res}$ previously identified.

8. Method according to claim 6 or 7, **characterized in that** the parameters $a_0$, $a_1$, $a_2$ and $a_3$ fulfill the following equations:

$$a_0 T_0 \qquad = v_{max}$$

$$a_0 - a_1 + a_2 - a_3 \qquad = 0$$

$$a\left(\frac{T_0}{2}\right) = \qquad a_0 + a_1 + a_2 + a_3 \qquad = a_{max}$$

$$a''(0) = \left(\frac{2\pi}{T_0}\right)^2 (a_1 - 4a_2 + 9a_3) \quad = j_{dot\ init}$$

with

$v_{max}$ being the speed during the phase at constant speed following the acceleration phase,
$a_{max}$ being the maximum acceleration at time $t=T_0/2$
jdot init being the second derivative of the acceleration at the beginning of the acceleration phase.

9. Method according to any one of the preceding claims, **characterized in that** the identification of said at least natural frequency $f_{res}$ is done on the machining tool provided with one or several sensors allowing the measurement of vibrations induced by the acceleration phase of said at least excitation axis, in which the identification can be done prior to the machining of the part.

10. Method according to any one of the preceding claims, **characterized in that** only the natural frequency or frequencies $f_{res}$ can induce a relative movement between the part and the tool greater than or equal to 1 $\mu$m are retained for the determination of $T_0$.

11. Method according to claim 10, **characterized in that**, when several natural frequencies $f_{res}$ can induce a relative movement between the part and the tool greater than or equal to 1 $\mu$m, the corrections applied on the acceleration profile for each excitation axis are superimposed.

12. Method according to any one of the preceding claims, **characterized in that** the compensation to be applied on each compliant axis is determined based on position and acceleration set points of said at least excitation axis.

13. Method according to any one of the preceding claims, **characterized in that** the compensation to be applied on each compliant axis is determined based on a first relationship:

$$Q_{CR}(s) = G_{CLE}(s) \cdot W_{QE}(s) + G_{CLC}(s) \cdot W_{QC}(s) = 0$$

with s being a variable of the Laplace transform,
$Q_{CR}(s)$ being the part-tool movement along each compliant axis, which must be equal to 0, $G_{CLE}(s)$ being a closed-loop transfer function of each excitation axis,
$G_{CLC}(s)$ being a closed-loop transfer function of each compliant axis,
$W_{QE}(s)$ and $W_{QC}(s)$ being a position set point of each excitation axis and each compliant axis respectively,
with a term $G_{CLE}(s) \cdot W_{QE}(s)$ for each excitation axis,
based on said first relationship, a compensation transfer function $G_{COMP}(s)$ being calculated according to a second relationship:

$$G_{COMP}(s) = -\frac{G_{CLE}(s)}{s^2 . G_{CLC}(s)}$$

with a term $G_{CLE}(s)$ for each excitation axis, each term being added to the numerator of said second relationship.

**14.** Computer program suitable for implementing the method according to any one of the preceding claims and, in particular, for processing data from the identification of said at least natural frequency $f_{res}$, determining $T_0$ and determining the compensation to be applied.

**15.** Numerical control on which the computer program according to claim 14 is implemented.

FIG.1

FIG.2

FIG.3

FIG.4

FIG.5

FIG.6

FIG.7

FIG.8

FIG.9

FIG.10

FIG.11

## EP 3 543 808 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **OKWUDIRE C.** A trajectory optimization method for improved tracking of motion commands using CNC machines that experience unwanted vibration. *CIRP Annals,* 07 Juin 2016, vol. 65 (1), 373-376